# DEMANDE DE BREVET EUROPEEN

(11) **EP 3 382 185 A1**
(43) Date de publication de la demande: **03.10.2018**
(21) Numéro de dépôt: 18161133.6
(22) Date de dépôt: 12.03.2018
(51) Int. Cl.: F02D 41/00, F02D 41/12

(54) **PROCÉDÉ DE CONTRÔLE D'UN MOTEUR À ALLUMAGE COMMANDÉ SURALIMENTÉ AVEC RECIRCULATION PARTIELLE DES GAZ D'ÉCHAPPEMENT, ET DISPOSITIF DE MOTORISATION ASSOCIÉ**

(30) Priorité: 30.03.2017 FR 1752679
(71) Demandeur: RENAULT s.a.s., 92100 Boulogne-Billancourt (FR)
(72) Inventeur: Besancon, Thomas, 92430 Bourg la Reine (FR); Pereira, Luc, 18320 Cours Des Barres (FR)

(57) **Abrégé**

L'invention propose un procédé de contrôle d'un moteur à allumage commandé du type suralimenté associé à un circuit de recirculation partielle des gaz d'échappement à l'admission, le moteur étant monté sur un véhicule automobile.

La principale caractéristique de ce procédé est que, en cas de lever de pied, on ferme d'abord la vanne du circuit EGR sans modifier la position du boîtier-papillon du moteur, et on active un alternateur du moteur pendant la durée de transfert des gaz recyclés depuis la vanne EGR jusqu'au moteur. Puis on désactive l'alternateur, on ferme presque complètement le boitier-papillon, et, dès que la pression d'admission du moteur devient inférieure à un seuil, on coupe l'injection de carburant.

L'utilisation du procédé est particulièrement avantageuse dans le cas où le circuit EGR est du type à basse pression, et/ou lorsque l'alternateur se présente sous la forme d'une machine électrique réversible, apte à ajuster la charge d'une batterie sans perte d'énergie.

## Description

### DOMAINE TECHNIQUE DE L'INVENTION

L'invention concerne un procédé de contrôle d'un moteur à combustion interne, du type à allumage commandé (fonctionnant notamment à l'essence), suralimenté, et associé par ailleurs à au moins un circuit de recirculation partielle des gaz d'échappement à l'admission du moteur. Il concerne plus particulièrement un procédé de réglage d'un tel moteur qui est monté dans un véhicule automobile, quand le conducteur lève complètement le pied de la pédale d'accélérateur du véhicule.

Elle concerne également un dispositif de motorisation pour la mise en oeuvre d'un tel procédé.

### ETAT DE LA TECHNIQUE

De nombreux moteurs à combustion interne suralimentés modernes sont équipés d'au moins un circuit de recirculation partielle des gaz d'échappement à l'admission du moteur.

L'intérêt d'un tel circuit, couramment désigné par le terme de circuit EGR (de l'acronyme en langue anglaise pour : Exhaust Gas Recirculation), est largement connu et utilisé sur les moteurs de type diesel pour diminuer les émissions d'oxydes d'azote qui sont produites en abondance dans les gaz de combustion de ces moteurs.

Sur les moteurs du type à allumage commandé, c'est-à-dire fonctionnant notamment à l'essence, les circuits EGR viennent aussi à être de plus en plus utilisés afin de diminuer la consommation de carburant du moteur : d'une part, l'apport de gaz déjà brûlés à l'admission du moteur permet d'augmenter le rendement de combustion grâce à une diminution de la température de combustion qui est due à la dilution des gaz, et d'autre part, sur de nombreux points de fonctionnement du moteur, la charge d'air frais qui est nécessaire à la production du couple moteur peut être modifiée grâce à un apport de gaz recyclés plutôt qu'en actionnant un boîtier-papillon du moteur, ce qui diminue les pertes par pompage du moteur.

Or, la présence d'un circuit de recirculation partielle des gaz d'échappement à l'admission sur un moteur du type à allumage commandé pose un problème particulier par rapport à un moteur du même type qui n'est pas équipé d'un tel circuit, plus particulièrement quand le moteur est monté dans un véhicule automobile. En effet, en cas de lever de pied de la part du conducteur du véhicule, c'est-à-dire lorsque le conducteur relâche complètement le pied de la pédale d'accélérateur, par exemple sur une pente descendante, un tel lever de pied correspondant à une consigne de couple C moteur nulle ou voisine de zéro, il est connu de procéder à la fermeture complète du boîtier-papillon du moteur (qui sert à doser le débit d'air frais entrant dans le moteur), de procéder simultanément à la fermeture presque complète d'une vanne de réglage de débit des gaz recyclés (vanne EGR), et ensuite de couper l'injection de carburant dans le moteur dès lors qu'on constate que le couple C est suffisamment proche de zéro, par exemple quand une valeur de pression dans le collecteur d'admission du moteur est inférieure à un seuil prédéterminé.

Or, le temps de transfert des gaz d'échappement recyclés entre la vanne EGR et les cylindres du moteur est plus long que le temps de transfert de l'air frais entre le boîtier-papillon et les cylindres, en raison d'une longueur plus importante à parcourir.

Plus particulièrement lorsque le circuit EGR est un circuit de recirculation dit à basse pression (circuit EGR BP), les gaz d'échappement sont généralement prélevés en un point du circuit d'échappement qui est non seulement situé en aval de la turbine du turbocompresseur du moteur suralimenté, mais aussi en aval d'un catalyseur de dépollution des gaz d'échappement des gaz de combustion du moteur. Puis, s'agissant d'un circuit à basse pression, les gaz d'échappement sont renvoyés en un point du circuit d'admission du moteur qui est situé en amont du compresseur du turbocompresseur du moteur.

On comprend que la distance à parcourir par ces gaz est beaucoup plus longue que la distance à parcourir par l'air frais entre d'une part le boîtier-papillon, qui est situé en aval du compresseur, et d'autre part les cylindres du moteur, étant donné que le boîtier-papillon n'est séparé des cylindres du moteur que par un collecteur d'admission.

En raison de ce temps de transfert plus important des gaz d'échappement recyclés, la fermeture simultanée et pratiquement instantanée du boîtier-papillon et de la vanne de recirculation partielle des gaz d'échappement, qui est provoquée par un calculateur du moteur lors du lever de pied, est suivie d'une phase de fonctionnement transitoire du moteur dans laquelle on ne peut pas vider instantanément et simultanément les cylindres d'air frais et de gaz recyclés.

Au contraire, on observe au départ une augmentation du taux de gaz recyclés dans les cylindres, qui est dû au fait que la quantité de gaz recyclés diminue moins vite que la quantité d'air frais. Un tel déséquilibre a tendance à rendre la combustion instable dans les cylindres à faible couple. Cela entraîne des pics de combustion anormale (également connue sous le terme anglo-saxon de « misfire »), dont les conséquences sont un calage du moteur, plus particulièrement dans le cas où le conducteur ouvre l'embrayage en plus de lever le pied, et un risque de dégradation irréversible du catalyseur de dépollution du moteur (catalyseur trois voies). De plus, on augmente les émissions de polluants du moteur pendant la phase transitoire, à cause du déséquilibre entre les proportions d'air frais et de gaz déjà brûlés par rapport au fonctionnement en mode stabilisé sur lequel le moteur est réglé.

Ces différents phénomènes sont encore amplifiés par le fait que, lorsqu'on ferme le boîtier-papillon du moteur, on crée une dépression dans les cylindres du moteur, qui a tendance à retenir les gaz de combustion dans les chambres de combustion après chaque cycle de combustion au lieu de les évacuer vers le collecteur d'échappement du moteur. On augmente ainsi la recirculation interne des gaz (gaz IGR), qui se cumule avec l'augmentation non souhaitée de la recirculation externe des gaz par le circuit.

On connaît de l'état de la technique plusieurs procédés qui visent à adapter la combustion des moteurs à essence suralimentés pourvus d'un circuit de recirculation partielle des gaz d'échappement à l'admission, moteurs dans lesquels des gaz brûlés prennent la place de l'air frais dans les cylindres du moteur. Par exemple, la publication FR-A1-2981404 propose d'adapter la boucle de carburant à la boucle d'air en estimant la composition du mélange d'air et de gaz brûlés dans les chambres de combustion, en particulier en transitoire, en pilotant l'avance à l'allumage ou une vanne EGR.

Il divulgue pour cela un procédé dans lequel on réalise une mesure relative de débit d'air ou de débit de gaz brûlés en amont du volume de mélange dans lequel l'air et les gaz brûlés se mélange, puis on estime la fraction massique des gaz brûlés présents dans le volume de mélange à partir de la mesure et d'un modèle de la dynamique de mélange dans le volume, et on estime un temps de transfert depuis le volume jusqu'au collecteur d'admission du moteur et on contrôle la combustion à partir de la fraction massique dans le collecteur d'admission.

Outre le fait que le modèle de la dynamique de mélange est complexe à mettre en oeuvre, ce procédé ne tient compte que du temps de transfert du mélange d'air et de gaz brûlés depuis le volume dans lequel ils sont mélangés jusqu'aux chambres de combustion, c'est-à-dire du volume qui est compris entre le point de débouché du circuit EGR dans le circuit d'admission, et les chambres de combustion. En d'autres termes, il ne tient pas compte du volume de gaz recyclés qui est compris entre la vanne EGR et ledit point de débouché, qui explique la différence de temps de transfert vers les chambres de combustion entre les gaz recyclés et l'air frais.

On notera enfin que ce document vise ensuite à régler classiquement le moteur à richesse 1, et ne traite pas du cas particulier d'un fonctionnement transitoire du moteur consécutif à un lever de pied de la part du conducteur. Le procédé qui y est exposé ne permet donc pas de résoudre les problèmes techniques visés par l'invention.

### RESUME DE L'INVENTION

L'invention propose de remédier de manière simple aux problèmes de calage moteur, de fiabilité du catalyseur de dépollution du moteur et d'émissions polluantes exposés plus haut.

Elle propose pour cela un procédé de contrôle d'un moteur à allumage commandé du type suralimenté et associé à au moins un circuit de recirculation partielle des gaz d'échappement à l'admission du moteur, ledit moteur étant monté sur un véhicule automobile, ledit procédé étant mis en oeuvre lorsqu'un conducteur du véhicule relâche la pédale d'accélérateur du véhicule, et comprenant des étapes au cours desquelles : on ferme presque complètement un boîtier-papillon de réglage du débit des gaz dans le moteur ; on ferme une vanne de réglage du débit des gaz d'échappement recyclés l'admission du moteur ; et, on coupe l'injection de carburant du moteur.

Selon l'invention, le procédé est caractérisé en ce qu'il comporte, successivement :
- Une étape au cours de laquelle on constate que la pédale d'accélérateur est relâchée ;
- Une étape au cours de laquelle on ferme ladite vanne de réglage du débit des gaz recyclés, et on ne ferme pas le boîtier-papillon ;
- Une étape d'activation d'un alternateur du moteur, qui débute quand on constate que la pédale d'accélérateur est relâchée, et qui se termine après une durée prédéterminée ;
- Une étape de fermeture presque complète du boîtier-papillon, à la fin de l'étape d'activation de l'alternateur ; et,
- Une étape de coupure de l'injection de carburant dans le moteur, lorsqu'une valeur de la pression régnant dans un collecteur d'admission du moteur est inférieure à un seuil.

### BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :
- la figure 1 est une vue schématique illustrant un dispositif de motorisation pour la mise en oeuvre du procédé selon l'invention ;
- la figure 2 est un organigramme illustrant les différentes étapes d'un procédé de contrôle selon un mode de réalisation de l'invention ; et,
- la figure 3 est un ensemble de trois graphiques illustrant l'évolution d'une consigne de couple, de pression de collecteur et de couple prélevé par un alternateur, dans un procédé selon l'invention.

### DESCRIPTION DETAILLEE DES FIGURES

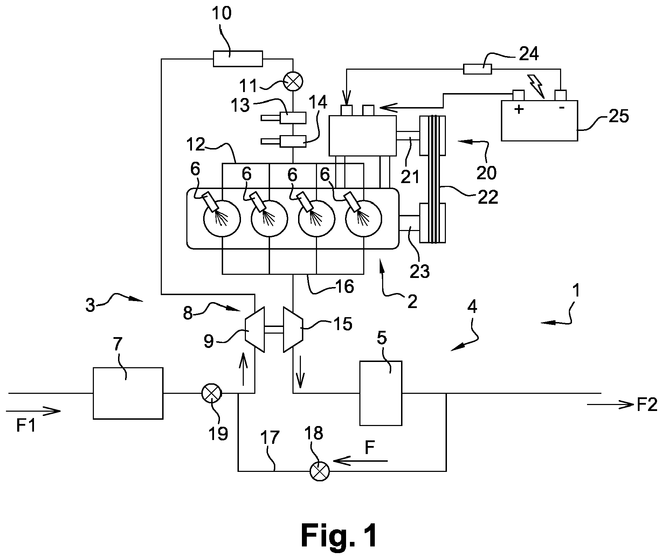

La figure 1 représente un dispositif de motorisation 1 apte à la mise en oeuvre du procédé selon l'invention, qui équipe notamment un véhicule automobile. Il comprend un moteur à combustion interne 2, du type à allumage commandé (fonctionnant notamment à l'essence), du type suralimenté, qui se présente ici de manière non limitative sous la forme d'un moteur à quatre cylindres en ligne.

Pour son fonctionnement, un tel moteur à allumage commandé 2 aspire de l'air dans le sens de la flèche F1 par l'intermédiaire d'un circuit d'admission 3, et rejette ses gaz d'échappement par un circuit d'échappement 4 afin de les diriger vers un système de dépollution 5 des gaz de combustion du moteur, par exemple un catalyseur trois voies 5, et de les évacuer dans l'atmosphère extérieure dans le sens de la flèche F2.

Le moteur consomme également du carburant, notamment de l'essence, qui est amenée au moteur grâce à un système d'injection (non représenté) et à au moins un injecteur 6 de carburant par cylindre apte à injecter le carburant directement dans chacun des cylindres, plus précisément dans chaque chambre de combustion délimitée dans chaque cylindre. En variante non représentée, chaque cylindre peut être alimenté par un injecteur individuel qui injecte le carburant dans une conduite d'admission en amont de chaque cylindre. Une bougie d'allumage (non représentée) débouche également dans chacune des chambres de combustion du moteur.

Dans le circuit d'admission d'air 3, un filtre à air 7 permet d'éliminer les poussières contenues dans l'air. S'agissant dans le cadre de l'invention d'un moteur 2 suralimenté, le moteur 2 comprend par ailleurs un turbocompresseur 8 dont le compresseur 9 est monté en aval du filtre à air 7. De plus, il est possible qu'un échangeur de température 10 soit disposé à l'aval du compresseur 8. Le circuit d'amission 3 comprend encore, en aval du compresseur 8, une première vanne de réglage 11 du débit des gaz entrant dans le moteur 2, ou boîtier-papillon 11, et un collecteur d'admission 12, ou répartiteur 12, du moteur. Un capteur de pression 13 des gaz d'admission Pcoll et un capteur de température 14 des gaz d'admission Tcoll sont interposés dans le circuit d'admission 3 entre le boîtier-papillon 11 et le collecteur d'admission 12. Ils peuvent aussi être montés sur le collecteur d'admission 12.

Le compresseur 9 est entraîné par une turbine 15 du turbocompresseur 8, par l'intermédiaire d'un arbre commun. La turbine 15 est montée dans le circuit d'échappement 4 du moteur, en aval d'un collecteur d'échappement 16 du moteur, plus précisément entre le collecteur d'échappement 16 et le dispositif de dépollution 5.

Classiquement, le turbine 15 peut être associée à une conduite de dérivation à l'échappement (non représentée) qui contourne la turbine 15 et qui comporte une vanne de décharge à l'échappement (également appelée vanne « waste gâte ») pour pouvoir limiter l'énergie apportée par les gaz d'échappement à la turbine 15, et donc pour pouvoir limiter la pression fournie par le compresseur 9. En variante, le turbocompresseur 8 peut comporter une turbine à géométrie variable, c'est-à-dire pourvue d'ailettes d'inclinaison variable permettant également de moduler l'énergie prélevée sur les gaz d'échappement.

De plus, dans le cadre de l'invention, le moteur thermique 2 comporte au moins un circuit de recirculation partielle des gaz d'échappement à l'admission, plus particulièrement un circuit dit EGR à haute pression et/ou un circuit EGR à basse pression (EGR : acronyme anglais pour « Exhaust Gas Recirculation », ou recyclage des gaz d'échappement).

Sur la figure 1, il s'agit de manière non limitative d'un circuit EGR à basse pression, dans le cadre duquel le procédé selon l'invention est le plus bénéfique. Il se présente sous la forme d'une conduite de recirculation 17 qui prend naissance en un point du circuit d'échappement 4 situé en aval du dispositif de dépollution 5, et dont l'autre extrémité débouche en un point du circuit d'admission 3 situé en amont du compresseur 9.

La conduite de recirculation 17 est pourvue d'une vanne de recirculation 18, ou vanne EGR 18, qui permet d'ajuster la quantité de gaz recyclés. On notera également que, pour qu'une circulation de gaz d'échappement puisse avoir lieu dans la conduite dans le sens indiqué par la flèche F, il faut que la pression au point de débouché soit plus faible qu'au point de prélèvement des gaz. A cet effet, il est possible qu'une vanne supplémentaire 19 soit montée dans le circuit d'admission 3 du moteur, en amont du point de débouché de la conduite EGR 17 dans le circuit d'admission. Quand cela est nécessaire, on peut réduire le degré d'ouverture de cette vanne supplémentaire, de manière à créer une dépression dans le circuit d'admission 3 au point de débouché de la conduite de recirculation 17, apte à augmenter la circulation des gaz d'échappement vers ce point.

De manière connue en soi, le moteur 2 fonctionne le plus généralement à richesse 1 pour la production du couple moteur. Par exemple, on règle l'angle αpap du boîtier-papillon 11 et la puissance de la turbine 15 en fonction de la pression Pcoll et de la température Tcoll de collecteur pour obtenir un débit massique de gaz donné dans les cylindres du moteur, et la vanne EGR 18 pour ajuster la proportion des gaz brûlés dans ledit débit de gaz. On règle la richesse en boucle fermée en ajustant le débit de carburant, grâce aux indications d'au moins un capteur à oxygène (non représenté) monté en amont du catalyseur 5. On règle aussi une valeur de l'avance à l'allumage en faisant jaillir une étincelle entre les électrodes des bougies d'allumage à un moment précis par rapport au point mort haut dans chaque cylindre.

Dans un mode de réalisation particulier, mais nullement limitatif, du dispositif de motorisation pour la mise en oeuvre du procédé selon l'invention, le moteur 2 est associé à une machine électrique 20, par exemple un alterno-démarreur 20 séparé du volant d'inertie du moteur thermique 2, et dont un arbre rotatif 21 est accouplé via des moyens de transmission 22 à un arbre rotatif 23 du moteur thermique 2, par exemple le vilebrequin du moteur. Une telle machine électrique 20 est apte à fonctionner en mode « moteur » ou en mode « génératrice », sous la supervision d'un boîtier de commande 24.

En mode « génératrice », la machine électrique 20 est un alternateur qui fournit un courant électrique destiné à être stockée dans une batterie 25 d'accumulateurs en prélevant un couple électrique Cₑ résistant ; en mode « moteur », elle est au contraire alimentée par du courant précédemment stocké dans la batterie 25 et elle fournit un couple électrique Cₑ moteur qui s'ajoute à celui C du moteur thermique pour être transmis aux roues du véhicule.

Le boîtier de commande 24 de la machine électrique comprend des moyens de surveillance de la charge CB de la batterie 25. Si le niveau de charge CB est insuffisant, c'est-à-dire inférieur à un seuil minimum de charge CBmin , par exemple 15% de la charge restante de la batterie, le boîtier de commande 24 interdit que la machine électrique 20 soit utilisée en mode « moteur ». Au-dessous de ce seuil minimum de charge CBmin , la batterie 25 n'est plus à même d'assurer la fonction d'apport de couple de la machine électrique 24, et il y a un risque d'usure prématurée des composants de la batterie 25. Inversement, si le niveau de charge CB est maximal, c'est-à-dire égale au seuil maximal de charge CBmax , le boîtier de commande 24 interdit que la machine électrique 20 soit utilisée en mode « génératrice ».

Dans un autre mode de réalisation du dispositif de motorisation, le moteur comporte un alternateur classique 20, par exemple monté sur une face d'accessoires du moteur et entraîné par un vilebrequin 23 du moteur grâce à une courroie ou à une chaîne d'accessoires 22. L'alternateur est apte à charger une batterie 25 du véhicule, dans la limite de la charge maximale de la batterie, en prélevant sur le vilebrequin du moteur un couple d'entraînement grâce à la courroie ou à la chaîne d'accessoires 22.

Dans le cas où la charge maximale de la batterie est atteinte, l'alternateur est désactivé et ne prélève pas de couple d'entraînement sur le vilebrequin du moteur. Il est néanmoins possible de laisser l'alternateur actif en lui faisant alimenter le réseau de bord du véhicule, par exemple en chauffant la lunette arrière du véhicule même si il n'y en a aucun besoin.

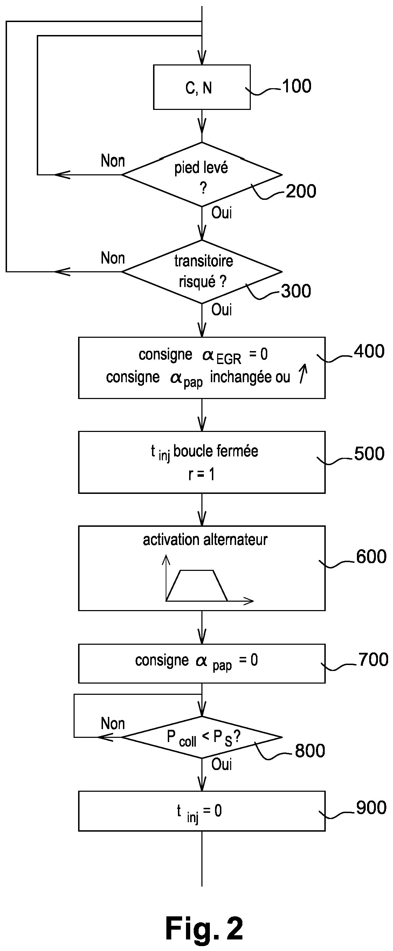

La figure 2 illustre les différentes étapes d'un procédé de contrôle selon l'invention, utilisant un dispositif de motorisation 1 tel qu'il vient d'être exposé, dans lequel on règle les paramètres de fonctionnement du moteur quand le conducteur lève le pied de la pédale d'accélérateur du véhicule. Il est mis en oeuvre de manière classique par un calculateur du moteur.

Le procédé débute par une étape 100 au cours de laquelle on détermine une valeur du couple C courant du moteur et du régime N du moteur. Le moteur est réglé à richesse 1. Par exemple le couple peut être obtenu à partir de la pression de collecteur Pcoll mesurée par le capteur de pression 13, de la température de collecteur Tcoll mesurée par le capteur de température 14, et de l'angle d'ouverture αpap du boîtier-papillon 11 ainsi que de l'angle d'ouverture αegr de la vanne EGR 18.

A l'étape suivante 200, on vérifie si le véhicule est dans une situation de lever de pied. On peut par exemple vérifier que l'enfoncement de la pédale d'accélérateur est nul, grâce à un capteur ou à un contacteur monté sur cette dernière.

Si ce n'est pas le cas, le procédé reprend à l'étape 100. Dans le cas contraire, le procédé oriente vers une étape 300 dans laquelle on vérifie si une telle situation de lever de pied constitue un cas de fonctionnement transitoire risqué pour le moteur, en d'autres termes, si les problèmes mentionnés plus haut de calage, de fiabilité du catalyseur 5 et de pollution, ont une forte probabilité de se produire. Cela correspond généralement au fait que le couple C et le régime N qui ont été relevés à l'étape 100 se trouvent dans des domaines respectifs de faible charge et de bas régime.

Si ce n'est pas le cas, le procédé reprend à l'étape 100, et le moteur continue d'être réglé normalement à richesse 1. Dans le cas contraire, le procédé se poursuit par une succession d'étapes qui sont spécifiques au procédé selon l'invention.

Au cours d'une étape 400, le calculateur du moteur passe instantanément une consigne d'angle d'ouverture αegr de la vanne EGR 18 à zéro, en d'autres termes il ferme complètement ladite vanne. D'autre part, dans un premier mode de réalisation de l'invention, il ne modifie pas la consigne d'angle d'ouverture αpap du boîtier-papillon 11, en d'autres termes, il maintient inchangée la position dudit boîtier-papillon par rapport à la position de l'étape 100.

Dans un deuxième mode de réalisation avantageux de l'invention, le calculateur augmente la consigne d'angle d'ouverture αpap du boîtier-papillon 11 par rapport à la position de l'étape 100, c'est-à-dire qu'il ouvre davantage le boîtier-papillon. Ce deuxième mode permet d'augmenter davantage la pression Pcoll de collecteur et de favoriser l'évacuation des gaz de combustion du moteur vers le collecteur d'échappement 16, diminuant ainsi les gaz recirculés internes (IGR).

En d'autres termes, quel que soit le mode retenu, on ne procède à aucune fermeture du boîtier-papillon.

A l'étape 500, quel que soit le mode retenu pour l'angle d'ouverture du boîtier-papillon à l'étape 400, le moteur continue d'être réglé à richesse 1. Le temps d'injection tinj de carburant est réglé en boucle fermée grâce aux indications d'une sonde à oxygène, comme à l'étape 100.

A l'étape 600, on active l'alternateur 20 ou la machine électrique 20 en mode « alternateur » de manière à prélever un couple électrique Ce d'entraînement sur le moteur 2. L'étape 600 débute à un instant t1 correspondant au moment où la situation de transitoire risqué est détectée (étape 300) et se termine à un instant t3. La durée comprise entre les instants t1 et t3, c'est-à-dire la durée d'activation de l'alternateur, correspond au temps de transfert des gaz recyclés entre la vanne EGR 18 et les cylindres du moteur. Cette durée peut être prédéterminée par des essais au banc en fonction du couple C et du régime précédant le pied levé.

Après la fin de l'activation de l'alternateur, à l'instant t3, le procédé se poursuit par une étape 700 au cours de laquelle le calculateur passe la consigne d'angle d'ouverture αpap du boîtier-papillon 11 à zéro, en d'autres termes, il ferme presque complètement ledit boîtier-papillon.

A l'étape 800, on mesure la pression Pcoll qui règne dans le collecteur d'admission 12. Celle-ci commence à baisser dès lors qu'on ferme le boîtier-papillon 11. On compare cette valeur de pression avec un seuil de pression Ps, et dès que ladite pression devient inférieure audit seuil, le procédé passe à l'étape 900 au cours de laquelle l'injection de carburant dans les cylindres est arrêtée.

Le moteur reste réglé dans cet état correspondant à l'étape 900 (boîtier-papillon presque complètement fermé et vanne EGR complètement ferméé ; pas d'injection de carburant) jusqu'à ce que la situation de pied levé prenne fin, c'est-à-dire au réattelage du moteur, lors d'un appui sur la pédale d'accélérateur.

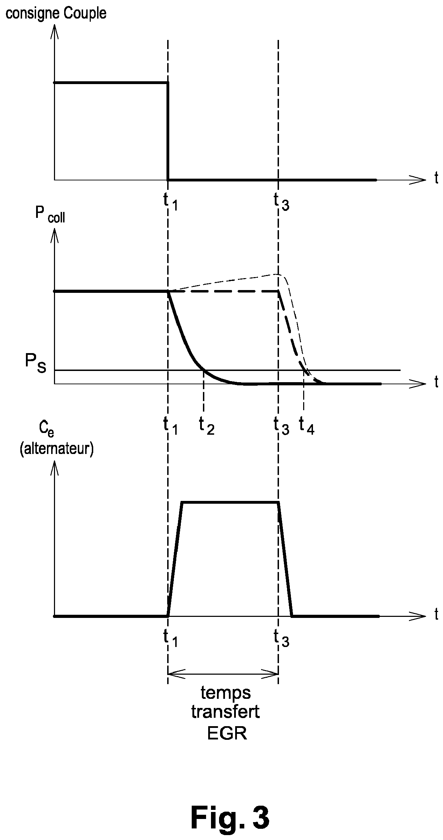

La figure 3 est un ensemble de trois graphiques qui illustrent le déroulement du procédé selon l'invention et qui le compare à un procédé classique de l'état de la technique. De bas en haut :
- Le premier graphique est une courbe d'évolution temporelle de consigne de couple, résultant de l'enfoncement de la pédale d'accélérateur ;
- Le deuxième graphique représente trois courbes d'évolution temporelle de la pression de collecteur Pcoll :
   I. La courbe en trait continu épais illustre l'évolution de la pression Pcoll dans le cas d'un procédé selon l'état de la technique, dans lequel, sur un lever de pied, on ferme aussitôt presque complètement le papillon et la vanne EGR, puis on coupe l'injection de carburant quand la pression devient inférieure à un seuil.
   II. La courbe en trait interrompu épais illustre l'évolution de la pression Pcoll dans le procédé selon l'invention, dans le mode de réalisation où on maintient l'angle du boîtier-papillon.
   III. La courbe en trait interrompu fin illustre l'évolution de la pression Pcoll dans le procédé selon l'invention, dans le mode de réalisation où on augmente l'angle du boîtier-papillon.
- Le troisième graphique illustre l'évolution du couple prélevé par l'alternateur ou la machine électrique.

Sur le premier graphique, on constate qu'un lever de pied à l'instant t1 se traduit par une consigne de couple C moteur qui passe instantanément de la valeur qui correspondait à l'enfoncement de la pédale d'accélérateur avant le lever de pied, à zéro.

Sur le deuxième graphique, avec le procédé selon l'état de la technique, la fermeture presque complète du boîtier-papillon dès l'instant t1 du lever de pied se traduit par une chute de la pression Pcoll, qui passe très rapidement du niveau correspondant au couple réel du moteur qui était disponible avant le début du lever de pied, à une valeur inférieure au seuil Ps dès l'instant t2 où on coupe l'injection de carburant.

En revanche, avec le procédé selon l'invention dans lequel on maintient l'ouverture du papillon, la pression Pcoll reste constante jusqu'à l'instant t3 où on arrête d'activer l'alternateur. Dans le deuxième mode de réalisation où l'on augmente l'ouverture du papillon, la pression Pcoll augmente jusqu'à ce même instant t3. Dans les deux cas, lorsque l'alternateur cesse d'être activé (voir l'instant t3 sur le troisième graphique) et que la consigne d'ouverture du boîtier-papillon passe à zéro, la pression de collecteur Pcoll commence à diminuer. Lorsqu'elle devient inférieure au seuil de pression Ps (instant t4 sur le deuxième graphique), l'injection de carburant est arrêtée.

La présence d'une machine électrique réversible 20, plutôt que d'un simple alternateur 20, est particulièrement avantageuse dans le cadre de procédé car on peut toujours garantir qu'elle peut être mise en marche pour prélever un couple d'entraînement sur le moteur. En effet, dans tous les cas il est nécessaire que la batterie 25 n'ait pas déjà atteint sa charge maximale CBmax pour que l'alternateur ou la machine électrique puissent être actionnés. La présence d'une machine électrique réversible permet de gérer la charge de la batterie pour éviter une telle situation de charge maximale. On peut notamment prévoir de faire fonctionner la machine électrique en mode moteur, en dehors des phases de lever de pied, pour fournir une partie du couple requis par le conducteur pour l'entraînement du véhicule, la différence étant fournie par le moteur. Cela permet de diminuer la charge de la batterie sans perte d'énergie significative.

Dans le cas où le moteur est équipé d'un alternateur simple, c'est-à-dire non réversible, on peut être contraint, pour conserver l'alternateur actif alors que la batterie a atteint sa charge maximale, d'alimenter le réseau de bord du véhicule par l'alternateur. Par exemple on peut provoquer un chauffage non nécessaire de la lunette arrière du véhicule, ce qui représente une perte d'énergie pour le moteur et une source de surconsommation de carburant.

## Revendications

1. Procédé de contrôle d'un moteur (2) à allumage commandé du type suralimenté et associé à au moins un circuit de recirculation (17) partielle des gaz d'échappement à l'admission du moteur, ledit moteur étant monté sur un véhicule automobile, ledit procédé étant mis en oeuvre lorsqu'un conducteur du véhicule relâche la pédale d'accélérateur du véhicule, et comprenant des étapes au cours desquelles : on ferme presque complètement un boîtier-papillon (11) de réglage du débit des gaz dans le moteur ; on ferme une vanne (18) de réglage du débit des gaz d'échappement recyclés à l'admission du moteur ; et, on coupe l'injection de carburant du moteur,
**CARACTERISE EN CE QU'**il comporte, successivement ;
- Une étape (200) au cours de laquelle on constate que la pédale d'accélérateur est relâchée ;
- Une étape (400) au cours de laquelle on ferme ladite vanne (18) de réglage du débit des gaz recyclés, et on ne ferme pas le boîtier-papillon (11) ;
- Une étape (500) au cours de laquelle on maintient l'injection de carburant dans le moteur pour un fonctionnement à richesse 1 ;
- Une étape (600) d'activation d'un alternateur (20) du moteur, qui débute quand on constate que la pédale d'accélérateur est relâchée, et qui se termine après une durée prédéterminée ;
- Une étape (700) de fermeture presque complète du boîtier-papillon (11), à la fin de l'étape d'activation de l'alternateur (20) ; et
- Une étape (900) de coupure de l'injection de carburant dans le moteur, lorsqu'une valeur de la pression (Pcoll) régnant dans un collecteur d'admission du moteur est inférieure à un seuil (Ps).

2. Procédé selon la revendication 1, **caractérisé en ce que** lors de l'étape (400) de fermeture de la vanne (18) de réglage de débit des gaz recyclés, on maintient constante l'ouverture du boîtier-papillon (11).

3. Procédé selon la revendication 1, **caractérisé en ce que** lors de l'étape (400) de fermeture de la vanne (18) de réglage de débit des gaz recyclés, on augmente l'ouverture du boîtier-papillon (11).

4. Procédé selon l'une quelconque des revendications précédentes, **caractérisé en ce que** la durée d'activation de l'alternateur est sensiblement égale au temps de transfert des gaz recyclés entre la vanne (18) de réglage de débit desdits gaz et le moteur.

5. Procédé selon la revendication 4, **caractérisé en ce que** la durée est prédéterminée par des essais en fonction du couple (C) et du régime (N) du moteur.

6. Dispositif de motorisation pour la mise en oeuvre du procédé selon l'une quelconque des revendications précédentes, comportant un moteur (2) à allumage commandé du type suralimenté associé à au moins un circuit de recirculation partielle (17) des gaz d'échappement à l'admission, **caractérisé en ce que** ledit circuit est un circuit de recirculation partielle à basse pression.

7. Dispositif selon la revendication précédente, **caractérisé en ce que** l'alternateur (20) se présente sous la forme d'une machine électrique (20) réversible associée au moteur, pouvant fonctionner en mode d'alternateur ou en mdoe de génératrice.
